(19) Europäisches Patentamt
European Patent Office
Office européen des brevets

(11) **EP 1 349 636 B1**

(12) **FASCICULE DE BREVET EUROPEEN**

(45) Date de publication et mention
de la délivrance du brevet:
**23.04.2008 Bulletin 2008/17**

(21) Numéro de dépôt: **01997339.5**

(22) Date de dépôt: **21.11.2001**

(51) Int Cl.:
*B01D 45/08* [(2006.01)]    *G01N 1/22* [(2006.01)]

(86) Numéro de dépôt international:
**PCT/FR2001/003662**

(87) Numéro de publication internationale:
**WO 2002/041973 (30.05.2002 Gazette 2002/22)**

(54) **SEPARATION DE PARTICULES VIVANTES D'UN GAZ SOUS PRESSION**

TRENNUNG VON LEBENDEN TEILCHEN EINES GASES UNTER DRUCK

SEPARATING LIVING PARTICLES OF A GAS UNDER PRESSURE

(84) Etats contractants désignés:
**AT BE CH CY DE DK ES FI FR GB GR IE IT LI LU MC NL PT SE TR**

(30) Priorité: **24.11.2000 FR 0015209**

(43) Date de publication de la demande:
**08.10.2003 Bulletin 2003/41**

(73) Titulaires:
• **L'air Liquide, S.A. à Directoire et Conseil de Surveillance pour l'Etude et l'Exploitation des Procédés Georges Claude**
**75321 Paris Cedex 07 (FR)**
• **L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventeurs:
• **MONNOT, André**
**F-78160 Le Perray en Yvelines (FR)**
• **NAWROCKI, Corinne**
**F-78360 Jouy en Josas (FR)**
• **MELEN, Stéphane**
**F-27430 Herqueville (FR)**
• **SCHREIBER, Valérie**
**F-92190 Meudon (FR)**

(74) Mandataire: **Mellul-Bendelac, Sylvie Lisette L'Air Liquide,**
**Service Propriété Intellectuelle,**
**75, Quai d'Orsay**
**75321 Paris Cedex 07 (FR)**

(56) Documents cités:
**WO-A-00/40338          US-A- 3 522 734**
**US-A- 3 968 012         US-A- 5 183 481**
**US-A- 5 514 593         US-A- 5 831 182**

**EP 1 349 636 B1**

## Description

L'invention appartient au domaine de la production, des applications et de l'analyse des gaz.

La qualité bactériologique des gaz et de l'air en particulier, devient une nécessité. Il existe des appareils commerciaux, qui permettent de contrôler la qualité microbiologique de l'air ambiant. Ces appareils sont utilisés dans les hôpitaux, les laboratoires pharmaceutiques, dans l'industrie agroalimentaire et dans toute activité devant être effectuée dans des "salles blanches", comme la fabrication des composants électroniques. Ces appareils fonctionnent selon deux méthodes : la méthode de filtration (appareils MILLIPORE™ et appareils SARTORIUS™) et la méthode d'impaction.

La méthode de filtration consiste à faire traverser un gaz à travers un porte filtre équipé d'un filtre de porosité comprise entre environ 0,22 $\mu$m et 0,45 $\mu$m. Les micro-organismes véhiculés par le flux gazeux et dont la taille est supérieure à celle des pores, sont retenus par le filtre. Le filtre est ensuite recueilli en conditions aseptiques, et il est soit lavé pour récupérer les micro-organismes soit mis directement en culture sur boîte de Pétri. Après une période déterminée d'incubation à l'étuve, on compte le nombre d'unités formant colonies (UFC) et on identifie les germes présents. On en déduit un nombre d'unités formant colonie par volume de gaz prélevé exprimé en UFC / m$^3$. Dans une variante de cette méthode on utilise un filtre hydrosoluble à base de gélatine ce qui permet après addition d'eau, de mettre directement le filtre en culture ou encore de le déposer sur une boîte de Pétri,

La méthode d'impaction consiste à prélever le gaz, à accélérer fortement son flux et à le diriger vers une cible enduite de gélose. Les particules et microorganismes ayant une quantité de mouvement suffisante quittent le flux d'air et sont projetées sur la surface de la cible enduite de gélose. Il existe deux variantes de cette méthode : "l'impaction par crible" selon laquelle le gaz passe au travers d'une plaque percée de trous. Chaque trou initiant un jet de gaz qui impacte la cible (appareil AIR TEST™ OMEGA) et "l'impaction par centrifugation" ou par "rotation du flux" selon laquelle les particules sont séparées du flux gazeux pour projeter par centrifugation, sur une bandelette de gélose (appareils RCS High Flow™ de Biotest ou BIAP™ d'ECOMESURE).

Pour le contrôle microbiologique de l'air ambiant, la plupart des appareils fonctionnent selon la méthode par impaction. Cependant, ces appareils ne permettent pas de déterminer de façon complète la contamination de l'air,

A titre illustratif, les documents US-5 831 182, US-5 183 481. et US-3 522 734 illustrent des exemples de dispositif de collecte de particules par impaction sur des milieux solides ou liquides. Le document WO00/40338 décrit une tuyère de forme convergente/divergente pour créer un écoulement en brouillard, utilisée pour la séparation par condensation et impaction de particules d'un gaz sous pression.

US5831182 divulgue un dispositif et une méthode de collecte de particules vivantes par impaction sur une suface de culture du type boite de Pétri. Il n'utilise pas de gaz sous pression et n' accélère pas le gaz à vitesse supersonique.

W00040338 et US5183481 divulguent des dispositifs de collectes de particules par impaction, utilisant des gas sous pression et accélérant le gaz à vitesse supersonique. Ces documents ne divulguent pas l'utilisation de ces dispositifs pour le piégeage des particules vivantes et revivifiables.

US3522734 décrit un dispositif et une méthode de collecte de particules vivantes par impaction. Il accélère le gaz à vitesse sonique mais n'utilise pas de gaz sous pression.

Il existe aussi des appareils, par exemple le BIO-IMPACTOR™ de chez AIR STRATEGIE™, fonctionnant selon cette même méthode, pour contrôler la qualité des gaz comprimés. L'appareil précité est conçu pour travailler à la pression du réseau sur lequel il est connecté, avec un débit de gaz constant de 28 litres / minute. Cependant, les résultats obtenus avec ces appareils sont peu reproductibles car ils dépendent d'un grand nombre de facteurs, comme la taille des particules viables à analyser, le type et la sensibilité des microorganismes, le niveau de la contamination, les conditions environnantes, la précision et l'efficacité du prélèvement de l'opérateur, le type et la hauteur de gélose recouvrant la cible, la vitesse d'impaction des particules et le volume de gaz prélevé par sa capacité à sécher plus ou moins la gélose. C'est pourquoi les résultats varient pour un même gaz d'un appareil à l'autre, qu'ils soient identiques ou différents.

De plus, bien que les pompes et les systèmes d'aspiration de ces appareils soient étalonnés et contrôlés de manière à prélever un volume précis de gaz en un temps donné avec une vitesse constante, il n'existe pas de rapport d'étalonnage permettant de déterminer de façon précise le taux récupération des microorganismes vivants réellement présents dans le volume l'air analysé. Certains fournisseurs ont défini les taux de récupération en fonction de la taille des particules, mais l'efficacité biologique, qui représente la capacité du collecteur à maintenir la viabilité des microorganismes collectés durant toute la procédure de prélèvement, n'a été que peu ou pas validée.

Enfin, il n'existe aujourd'hui aucune norme définissant un nombre maximum de microorganismes à ne pas dépasser par m$^3$ d'air ambiant ou par m$^3$ de gaz analysé, que ce soit dans l'industrie agroalimentaire, dans l'industrie pharmaceutique ou même dans le milieu médical. N'ayant pas de normes spécifiques à l'aérobiocontamination, (à l'exception des salles blanches), il est nécessaire d'établir une cartographie de cette contamination. Les seules normes existantes sont relatives à l'empoussièrement.

La demanderesse a donc cherché à développer un procédé de séparation de particules d'un gaz ou d'un mélange de gaz.

C'est pourquoi, l'invention a pour objet un procédé de séparation par impaction, de particules vivantes et revivifiables d'un gaz ou d'un mélange de gaz sous pression en contenant, comme défini par la revendication 1.

Par gaz ou mélange de gaz sous pression, on désigne un gaz ou un mélange de gaz à une pression totale supérieure à 1 atmosphère (environ $10^5$ Pa) généralement à une pression totale inférieure ou égale à 200 atmosphères, et plus particulièrement à une pression totale inférieure ou égale à 10 atmosphères.

Par brutale, on entend dans la présente demande de brevet, une décélération qui permet de réduire la vitesse d'un écoulement gazeux, ayant un nombre de mach compris entre 1 et 3, à une vitesse axiale nulle sur la cible.

Par volume confiné (V), dans lequel se déroulent les étapes (a) et (b) et à l'extrémité duquel se déroule l'étape (c), on entend dans la présente invention, un volume fini délimité par une surface latérale finie et ladite surface latérale est une surface de révolution autour de l'axe (x).

Le débit de gaz dont on souhaite déterminer la qualité microbiologique varie selon la provenance et /ou l'utilisation qui est faite dudit gaz. Il est souvent compris entre 50 litres par minute et 400 litres par minute et plus particulièrement entre 100 litres par minute et 200 litres par minute.

Le procédé objet de la présente invention peut être mis en oeuvre avec n'importe quel gaz ou mélange de gaz.

Comme exemples de gaz ou de mélanges de gaz, il y a par exemple, l'air, l'oxygène ($O_2$), l'azote ($N_2$), le dioxyde de carbone ($CO_2$), l'hélium (He), le protoxyde d'azote ($N_2O$), le monoxyde d'azote (NO), les mélanges de protoxyde d'azote et d'oxygène, de dioxyde de carbone et d'oxygène, d'azote et de monoxyde d'azote ou d'hélium et d'oxygène, et plus particulièrement les mélanges (50 % en volume (v/v) $N_2O$ + 50 % v/v $O_2$), (5 % v/v $CO_2$ + 95 % v/v $O_2$), (200 ppm à 800 ppm NO dans $N_2$), (78 % v/v He + 22 % v/v $O_2$), (65 % He +35 % $O_2$) et (80 % v/v He + 20 %v/v $O_2$), utilisés en médecine ou encore les mélanges d'azote et de dioxyde de carbone ($N_2$ + $CO_2$) utilisés dans l'industrie alimentaire.

Selon un premier aspect particulier, le volume confiné consiste en une première fraction de volume ($V_a$) dans laquelle est mise en oeuvre l'étape (a), délimitée par deux bases ($B_1$) et ($B_2$), de surfaces $S_1$ et $S_2$, avec $S_1$ supérieure ou égale à $S_2$ et une deuxième fraction de volume ($V_b$) contiguë à ($V_a$), dans laquelle est mise en oeuvre l'étape (b) délimitée par ($B_2$) et une base ($B_3$) de surface $S_3$ avec $S_3$ supérieure ou égale à $S_2$.

Lorsque $S_1$ et $S_2$ sont égales, $S_1$ est inférieure à la section du flux de gaz circulant en amont du volume (V).

Selon un mode particulier du procédé objet de la présente invention, la vitesse du flux du gaz ou du mélange de gaz à l'issue de l'étape (a), est supérieure à la vitesse du son.

Selon un autre mode particulier du procédé objet de la présente invention, la vitesse axiale selon l'axe (x), du flux du gaz ou du mélange de gaz à l'issue de l'étape (b), tend vers zéro.

Selon un autre mode particulier de procédé tel que défini précédemment, L'étape (d) de piégeage est mise en oeuvre sur une surface cible capable de fixer lesdites particules.

Par particules vivantes et revivifiables, on désigne des microorganismes de tous ordres, capables de se reproduire dans des conditions de pression et de température appropriées.

De préférence la surface - cible est celle d'un milieu nutritif permettant le développement et la reproduction des microorganismes piégés. Il peut s'agir d'un milieu liquide ou d'un milieu solide comme la gélose. Selon le type de microorganismes dont on cherche à déterminer la présence, ledit milieu sera spécifique à la croissance d'une ou plusieurs espèces de bactérie ou non spécifique.

Comme exemples de milieu solide nutritif mis en oeuvre pour piéger les particules, il y a :

- le milieu TCS™ (laboratoire AES référence : AEB 522 859) (tryptocaséine-soja), qui est un milieu non sélectif comprenant 15 g /l de pastone, 5 g /l de peptone papaïnique de soja, 5 g /l de chlorure de sodium et 15 g /l d'agar ;
le milieu R2A™ (laboratoire AES, référence AEB 523 480) qui est un milieu non sélectif comprenant 1,0 g/l d'un mélange de peptones (protéose peptone), 0,5 g /l d'extrait de levure, 0,5 g /l d'hydrolysât acide caséine, 0,5 g/ l de dextrose, 0,5 g /l d'amidon soluble, 0,3 g /l de phosphate dipotassique ($K_2HPO_4$), 0,024 g /l de sulfate de magnésium, 0,3 g /l de pyruvate de sodium et 15 g /l d'Agar.

- le milieu R3A™ qui est un milieu non sélectif comprenant 1,0 g/l d'un mélange de peptones (protéose peptone), 1,0 g /l d'extrait de levure, 1,0 g /l d'hydrolysât acide caséine, 1,0 g/l de dextrose, 1,0 g/l d'amidon soluble, 0,6 g /l de phosphate dipotassique ($K_2HPO_4$), 0,10 g /l de sulfate de magnésium, 0,10 g /l de pyruvate de sodium et 30 g/l d'Agar.
le milieu de MOSSEL (laboratoire AES, référence AEB 521 740) qui un milieu spécifique à la croissance de *Bacillus cereus* et des *Bacillus spp* en général.

La dureté à l'impaction de ces milieux peut être modifiée en modifiant la concentration en Agar ou Agar-agar.

L'invention a aussi pour objet une variante du procédé tel que défini précédemment comprenant en outre une étape (e) de comptage des particules piégées lors de l'étape (d).

L'étape (e) consiste de préférence, en une éta-

pe $e_1$ de cultures des particules vivantes et revivifiables piégées à l'issue de l'étape (d) suivie d'une étape ($e_2$) de comptage des unités formant colonies. L'étape de culture peut consister au maintien du milieu nutritif contenant les particules piégées à une température pennettant la reproduction des microorganismes pendant un temps déterminé.

Le procédé tel que défini précédemment, permet de séparer efficacement des microorganismes ayant des dimensions comprises entre 0,05 $\mu$m et 25 $\mu$m et plus particulièrement entre 0,2 $\mu$m et 12 $\mu$m.

Comme exemples de microorganismes dont on a déterminé la concentration dans un gaz sous pression, par la variante du procédé tel que décrit précédemment, il y a les moisissures et levures telles que, *Aspergillus candidus, Aspergilus nidulans, Aspergillus niger, Blastomyces, dermatitis, Mucor indicus, Penicillum glarum, Rhodotorula lubra, Cryptococcus albidus, hansenula polymorpha, Rhodotorula mucilaginosa, Rhodotorula mucilaginosa ou Candida kefyr; les bactéries Gram $^+$ telles que Brevibacillus brevis, Bacillus sphaericus, Bacillus Cereus, Bacillus antracis, Bacillus subtilis, Bacillus coagulans, Micrococcus luteus, Micrococcus varians, Staphilococcus xylosus, Staphilococcus haemolyticus, Staphilococcus saprophyticus, Staphilococcus hominis ou Staphilococcus warneri ; les bactéries Gram⁻ telles que Acinetobacter sp, Escherichia vulneris, Pseudomonas chloraphis, Pseudomonas, vesicularis ou Chryseomonas luteola.*

Selon un autre objet de la présente invention celle-ci a pour objet un procédé de détermination de la qualité microbiologique d'un gaz ou d'un mélange de gaz sous pression, par mise en oeuvre de la variante du procédé de séparation telle que décrite précédemment.

Le procédé et sa variante permettent la collecte sur boîte de Pétri de germes présents dans un gaz sous pression. Le gaz analysé peut provenir de bouteilles, de cadres ou d'un réseau (primaire ou secondaire), et plus particulièrement d'un réseau d'alimentation en gaz médicaux tels qu'ils se trouvent dans les établissements de soins, comme les hôpitaux, les dispensaires ou les cliniques. Le gaz n'a pas besoin d'être détendu à la pression atmosphérique pour être analysé par le procédé décrit précédemment.

Le dispositif (D) comprend :

- Un élément ($D_1$) dans lequel le monoflux de gaz subit successivement les étapes (a) et (b),
- Un élément ($D_2$) constituant la cible sur laquelle les particules vivantes ou revivifiables sont piégées selon l'étape (d) et,
- Des moyens permettant de solidariser ($D_1$) et ($D_2$) tout en permettant à l'écoulement du gaz ou du mélange de gaz de changer de direction selon l'étape (c).

L'élément ($D_1$) du dispositif (D), est un solide creux, comprenant un orifice d'entrée, un orifice de sortie, une surface latérale inférieure $S_L$, définissant un volume confiné (V) ayant des sections orthogonales polygonales, elliptiques ou cylindriques, dans lequel se déroulent les étapes (a) et (b) du procédé tel que défini précédemment à l'orifice de sortie duquel se déroule l'étape (c). La surface $S_L$ est plus particulièrement, soit une surface de révolution autour d'un axe (x) soit une surface latérale d'un polyèdre régulier d'axe de symétrique (x), soit un ensemble d'une ou plusieurs surfaces de révolution et/ou une ou plusieurs surfaces de polyèdres réguliers, de même axe de symétrie (x), définissant le volume, (V). Les deux orifices sont de préférence co-axiaux par rapport à l'axe (x).

L'élément ($D_1$) peut être en tout matériau que ce soit un plastique un métal ou un alliage de métaux. il est de préférence en un matériau stérilisable à chaud.

L'élément ($D_1$) du dispositif (D) comprend plus particulièrement une surface latérale interne $S_L$ définissant une première fraction de volume ($V_a$) de forme tronconique ou cylindrique, dans laquelle est mise en oeuvre l'étape (a), et une deuxième fraction de volume ($V_b$) contiguë à ($V_a$), de forme tronconique, dans laquelle est mise en oeuvre l'étape (b).

L'élément ($D_1$) du dispositif (D) a tout particulièrement une forme définissant une première fraction de forme cylindrique de hauteur h et de diamètre w, dans laquelle est mise en oeuvre l'étape (a), et une deuxième fraction de forme tronconique de hauteur H de petite base de diamètre w et de grande base de diamètre W dans laquelle est mise en oeuvre l'étape (b). L'orifice d'entrée est dans ce cas de section circulaire de diamètre w et l'orifice de sortie est de section circulaire et de diamètre W.

Le rapport h/w est, en général, compris entre 10/1 et 1/10. Il est plus particulièrement compris entre 10/2 et 2/10.

Le rapport W/w est, en général, compris entre 50/1 et 5/1. Il est plus particulièrement compris entre 25/1 et 10/1.

Le rapport H/w est, en général, compris entre 5/1 et 50/1. Il est plus particulièrement compris entre 10/1 et 40/1.

H est en général, compris entre 10 mm et 200 mm, plus particulièrement entre 30 mm et 120 mm et tout particulièrement entre 40 mm et 100 mm.

Lorsque la pression totale du gaz entrant dans le dispositif est inférieure à 5 atmosphères, dans l'élément ($D_1$) du dispositif (D) utilisé pour mettre en oeuvre le procédé tel que défini précédemment, la valeur de w est, en général, comprise entre 2 et 5 mm environ et elle est plus particulièrement égale à environ 4 mm.

L'élément ($D_2$) du dispositif (D) est de préférence de forme cylindrique et de diamètre $W_1$ supérieur ou égal à W. En général, $W_1$ est inférieur ou égal 90 mm. W est, en général, compris en 50 mm et 90 mm. Il s'agit de préférence d'une boite Pétri. L'élément ($D_2$) contient en général un milieu nutritif pour les microorganismes et plus particulièrement de la gélose.

Les moyens permettant de solidariser $D_1$ et $D_2$ tout en permettant à l'écoulement du gaz ou du mélange de gaz de changer de direction selon l'étape (c) du procédé tel que défini précédemment sont par exemple des plots. Ils permettent de maintenir l'élément $D_2$ à une distance d de $D_1$ suffisante pour permettre l'entier écoulement du gaz ou du mélange de gaz à la sortie de l'élément $D_1$, de façon radiale en moyenne à l'axe (x).

Le rapport H/d est, en général, compris entre 2/1 et 20/1. Il est plus particulièrement compris entre 3/1 et 15/1.

Les plots permettent de préférence la libération des éléments $D_2$ et $D_1$, afin d'effectuer plus facilement la culture des particules vivantes et revivifiables.

Le dispositif (D) tel que défini précédemment peut comprendre en outre un élément ($D_0$) de connexion tel que par exemple une prise crantée capable de s'adapter à une prise de gaz médical, un tube de petit diamètre capable de s'adapter à la sortie d'un manodétendeur et plus généralement tout raccord capable de s'adapter à tout dispositif de délivrance de gaz sous pression.

Le dispositif (D) tel que défini précédemment peut comprendre en outre un manodétendeur placé entre l'élément de connexion ($D_0$) et l'élément ($D_1$).

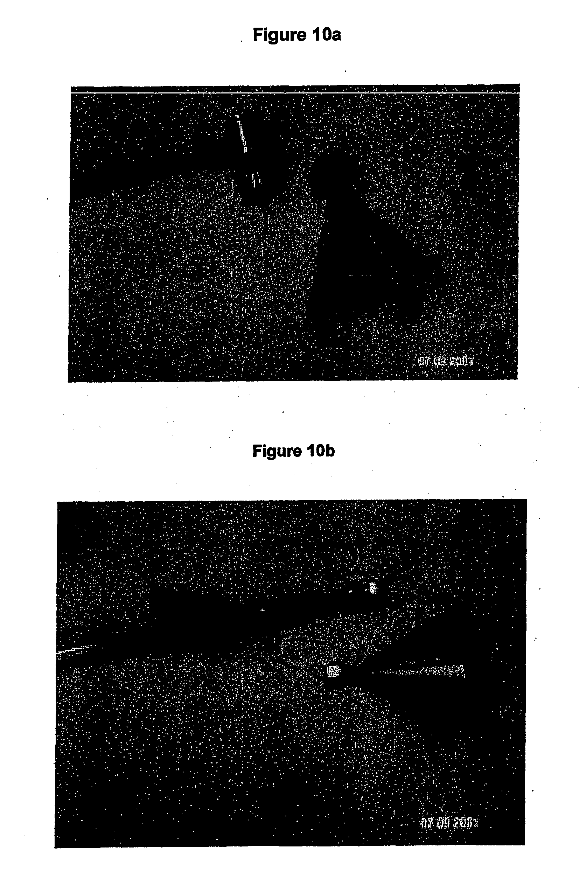

Le dispositif (D) tel que défini précédemment, peut être relié à l'alimentation en gaz à analyser soit en étant connecté sur une prise murale de façon perpendiculaire à la canalisation, soit en étant connecté de façon coaxiale à la canalisation d'alimentation du gaz à analyser, de préférence en aval d'une vanne 1/4 de tour de telles options sont illustrées par les figures 10a et 10b.

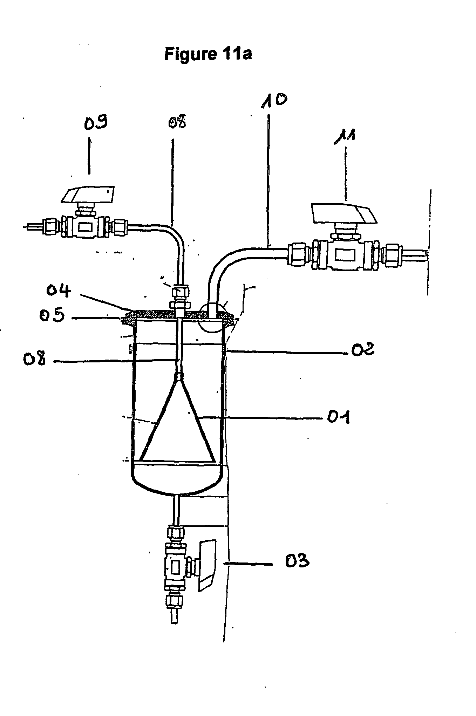

Lorsque la surface - cible est un milieu liquide comme l'eau ou une solution nutritive, l'élément $D_1$ est placé dans un vase de collection tel que celui représenté sur la figure 11a. Sur cette figure, l'élément $D_1$ est l'élément (01).

Le vase (02) est muni en sa partie inférieure à une vanne (03) de vidange qui permet la récollection du liquide contenant les particules impactées.

Il est fermé en sa partie supérieure par un couvercle (04) si nécessaire muni d'un joint d'étanchéité (05), au moyen par exemple, d'un collier de serrage (06). Le couvercle (04) est percé en son centre de façon à permettre, grâce à un tube (08), la liaison entre l'élément (01) et la vanne (09). Il est aussi percé en une position excentrée de façon à le connecter par un tube (10) à une vanne de sortie (11).

Selon un aspect particulier de cette variante, le vase de collection ainsi que le couvercle sont en métal et peuvent être stérilisés en autoclave.

Selon un autre aspect particulier, le vase a une capacité d'environ un litre et il résiste à une pression maximale d'environ 5,5 atmosphères.

Selon un autre aspect, la position de l'élément (01) dans le vase (02) est réglable en hauteur de façon à pouvoir modifier la quantité de liquide ou la hauteur d'impaction par rapport à la surface supérieure du liquide.

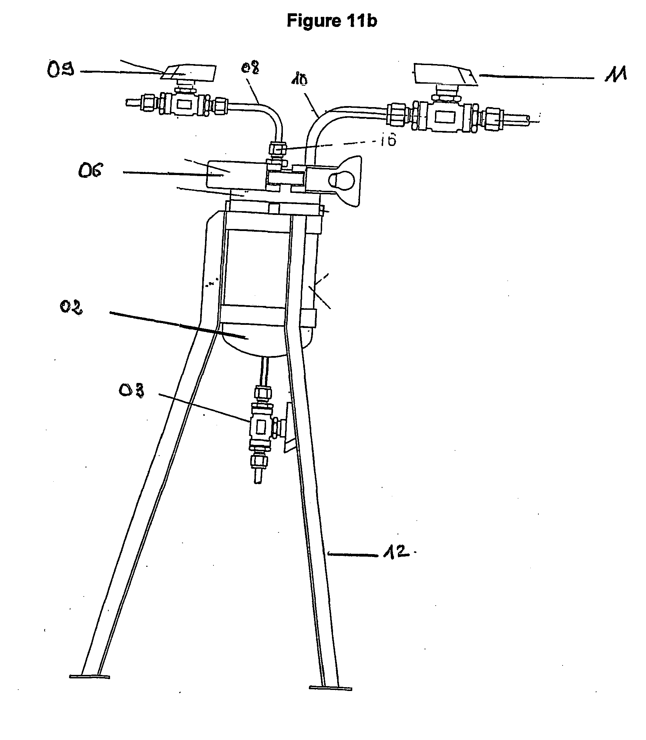

Le vase peut reposer sur un trépied (12), comme illustré par la figure 11.

Le procédé objet de la présente invention, peut être mis en oeuvre pour déterminer la qualité microbiologique de gaz ou de mélanges de gaz contenus dans des bouteilles, qu'il s'agisse de bouteilles médicales ou de bouteilles industrielles comme celles destinée à l'industrie de fabrications des composants électroniques, à l'industrie alimentaire ou à l'industrie pharmaceutique.

Le procédé objet de la présente invention peut aussi être mis en oeuvre pour déterminer la qualité microbiologique de gaz ou de mélanges de gaz délivrés par des réseaux d'alimentation, tels que les réseaux d'alimentation hospitaliers permettant notamment la délivrance de gaz dans les chambres ou les blocs opératoires, les réseaux d'alimentation des chaînes fabrication d'aliments surgelés, les réseaux d'alimentation en gaz de très haute pureté pour la fabrication de composants électroniques ou les réseaux d'alimentation en gaz nécessaires à la fabrication et/ou au conditionnement des produits et formulations pharmaceutiques.

Le procédé objet de la présente invention peut aussi être mis en oeuvre pour déterminer la qualité microbiologique de gaz ou de mélanges de gaz en sortie d'une unité de production du gaz ou du mélange de gaz, comme par exemple, un compresseur, une colonne de distillation cryogénique, une colonne de séparation des gaz par adsorption, qu'il s'agisse d'une colonne PSA (pressure swing adsorption), d'une colonne VSA (volume swing adsorption) ou d'une colonne TSA (temperature swing adsorption) ou d'une unité de séparation des gaz par perméation à travers des membranes polymères telles que par exemple une unité FLOXAL™.

Le procédé objet de la présente invention peut aussi être mis en oeuvre pour déterminer la qualité microbiologique de l'air ambiant dans des locaux, et plus particulièrement dans les salles blanches des sites de fabrication de médicaments ou des sites de fabrications de composants électroniques ou encore dans les sites de conservations de documents.

Les exemples suivants illustrent l'invention sans toutefois la limiter.

Exemple de dispositif utilisable pour le procédé selon l'invention.

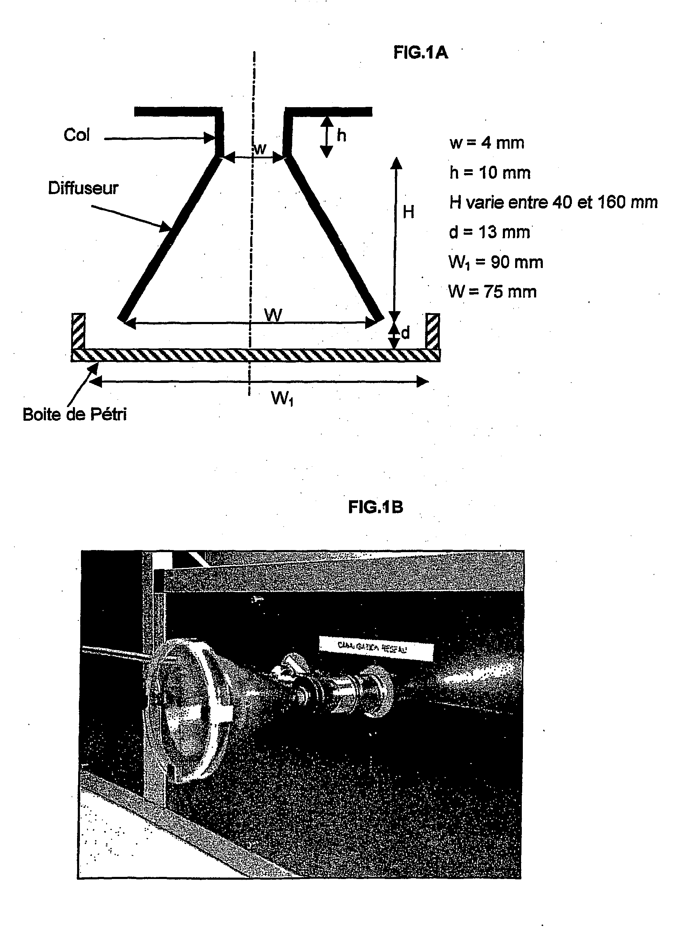

La figure 1A illustre un dispositif utilisable pour le procédé selon l'invention. Il est constitué d'un col, d'un diffuseur et d'une boite de Pétri. Le dispositif fonctionne de façon à ce que la vitesse du jet continue d'augmenter, tant que sa pression n'a pas atteint la pression ambiante. La pression totale d'alimentation est de 3.5 bars. La température totale est de 300 K.

Un dispositif pour lequel H est égal 80 mm est présenté sur la photo de la figure 1B.

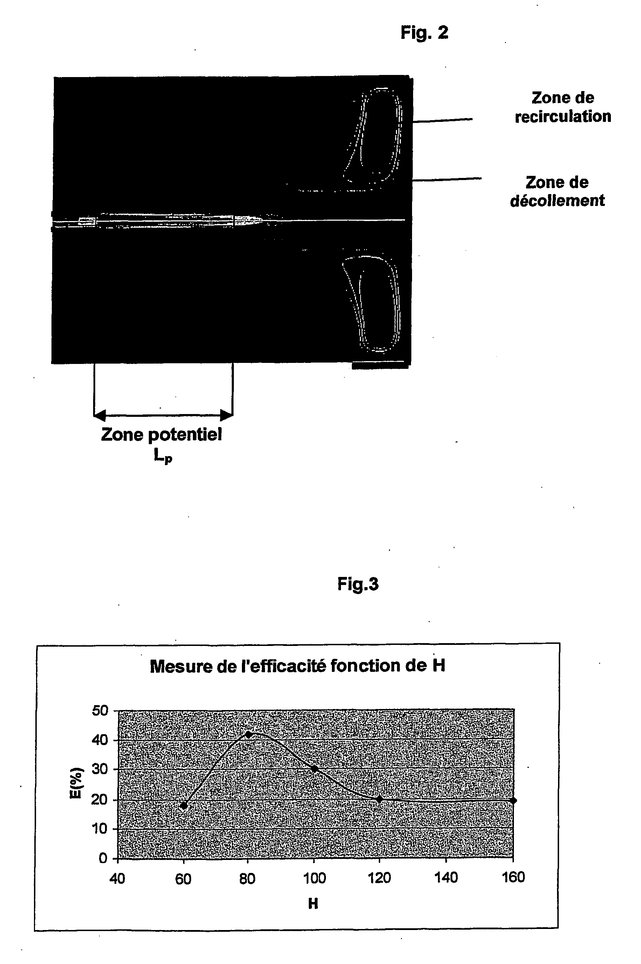

La figure 2 met en évidence, les champs de vitesse dans le dispositif. Dans le col, le fluide va accélérer jusqu'à la vitesse du son à la sortie du col, ensuite, il y a des zones de pression/détente faible où l'écoulement va être alternativement accéléré et ralenti. Cette zone est définie ici comme zone potentiel de longueur $L_p$, la turbulence ne joue pas. Plusieurs simulations ont été effectuées pour des longueurs de diffuseur de 40 mm, 60 mm, 80 mm, 100 mm et 120 mm. De même que des mesures expérimentales d'efficacité d'impaction ont été réalisées pour des valeurs de 60 mm, 80 mm, 100 mm, 120 mm et 160 mm.

On définit une nouvelle formulation du nombre de Stockes pour ce type d'impacteur par la formule :

$$St = C\ St_0\ \frac{w}{H - Lp}$$

avec C compris entre 1 et 5 et $L_p$ la longueur de la zone potentiel. $L_p$ peut être calculé pour cet exemple par la formule :

$$\frac{L_p}{d_j} = 4.2 + 1.1(M_j^2 + 1 - \frac{T_j}{T_a})$$

dans où l'indice j correspond à l'état après une détente isentropique de la pression génératrice à la pression atmosphérique.

Elle constitue une généralisation de la formule empirique donnée par Lau, Morris et Fisher :

$$St_0 = \tau_0\ \frac{V_{j\max}}{w}$$

avec $V_{j\max}$ la vitesse maximum du jet pleinement développé,

$$\tau = d_p^2 \rho_p K /(9\mu)$$

K étant compris entre 0.1 et 2, p étant le diamètre des particules, $\rho_p$ la densité de ces particules. $\mu$ La viscosité du fluide transportant lesdites particules.

H est calculé tel que $\sqrt{St} > 0.2$.

La figure 3 représente la courbe d'efficacité du dispositif utilisable pour le procédé selon l'invention, en fonction de H, d étant fixé à 13 mm.

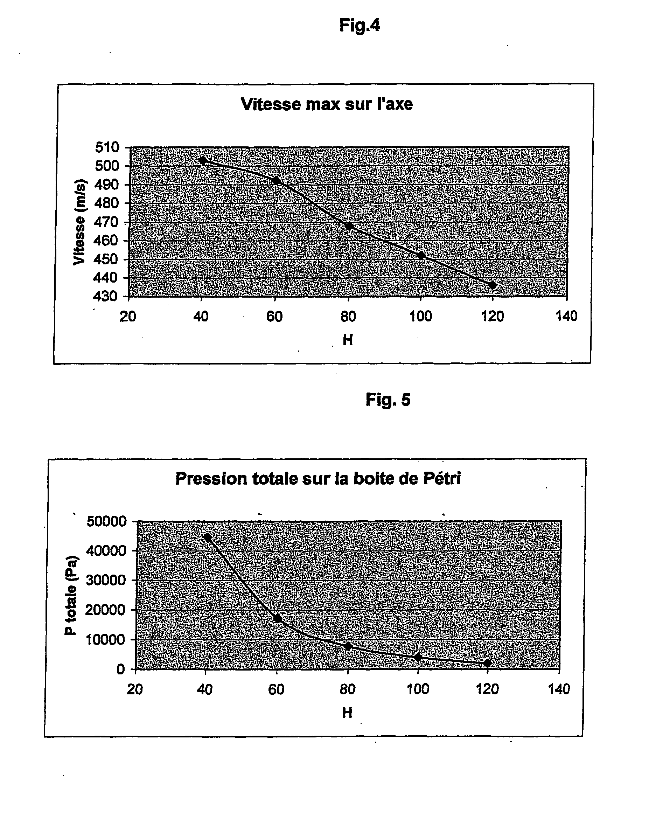

La figure 4 représente la courbe de la vitesse axiale maximum du monoflux dans le dispositif en fonction de H.

La figure 5 représente la courbe de la pression totale sur la cible dans le dispositif en fonction de H

Pour la pression totale, afin de préserver l'intégrité de la gélose utilisée dans cette application particulière, on cherche à avoir Pt < 7500 Pa, ce qui pour le dispositif de la figure 1B implique H = 80 mm.

Détermination de la qualité bactériologique d'un gaz.

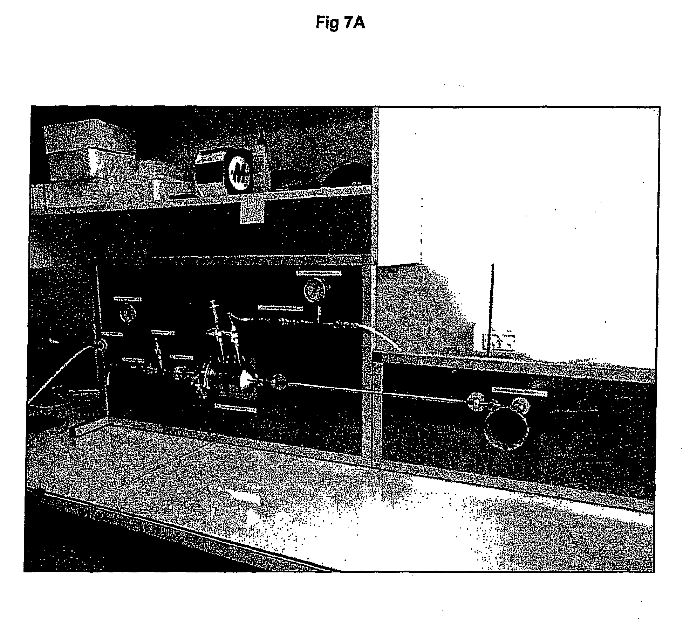

On utilise le banc d'essai présenté sur la photo de la figure 7A muni du dispositif. Ce banc d'essai se connecte directement sur une prise réseau ou à la sortie d'un manodétenteur. Le dispositif présenté sur la figure 1A est connecté à l'extrémité du banc d'essai.

On effectue un prélèvement pendant un temps déterminé ce qui correspond à une quantité de gaz analysé parfaitement connue (généralement 100L).

La boîte de Pétri qui a servi à la collecte des germes, est ensuite placé à l'étuve.

Les paramètres de cultures des microorganismes ( choix du milieu de culture, température et temps d'incubation) sont choisis en fonction du type de germes à identifier. Les boîtes de Pétri sur lesquelles se sont impactées les particules contenues dans le flux gazeux, sont mises en culture. Après incubation, on compte le nombre d'UFC et l'on ramène ensuite ce nombre au volume de gaz analysé. Ceci permet de déterminer un nombre d'UFC/ $m^3$ de gaz.

Chaque colonie peut être ensuite repiquée pour identification.

En fonction de la pression du gaz à analyser, on détermine un temps de prélèvement en général compris entre 10 secondes et 3 minutes pour que le volume de gaz à analyser soit suffisant en général inférieur à 500L.

Un volume connu d'une suspension de bactéries en quantité déterminée est nébulisé pendant qu'un volume de gaz défini est injecté dans le banc d'essais. En sortie du banc, on dispose donc d'un volume connu de gaz contenant un nombre parfaitement déterminé de microorganismes en suspension dans ce volume. On récupère à la sortie de la canalisation, les bactéries par le dispositif selon l'invention. Connaissant la quantité de microorganismes injectée et la quantité recueillie par le collecteur on peut en déduire le taux de récupération du dispositif. Plusieurs longueurs de cône ont été essayées :

Le cône de longueur 50 mm donne un taux de récupération de 20%
Le cône de longueur 80 mm donne un taux de récupération de 40%
Le cône de longueur 170 mm donne un taux de récupération de 20%

Nous avons également étudié le diamètre d'entrée du cône.

Nous avons testé des diamètres de 2 mm et 4 mm.

Le diamètre 4 mm (pour une longueur de 80 mm) donne un taux de récupération de 40%

Le diamètre 2 mm (pour une longueur de 80 mm) donne un taux de récupération de 12%

C'est donc un cône de 80 mm de longueur et un orifice de 4 mm qui donne le meilleur taux de récupération.

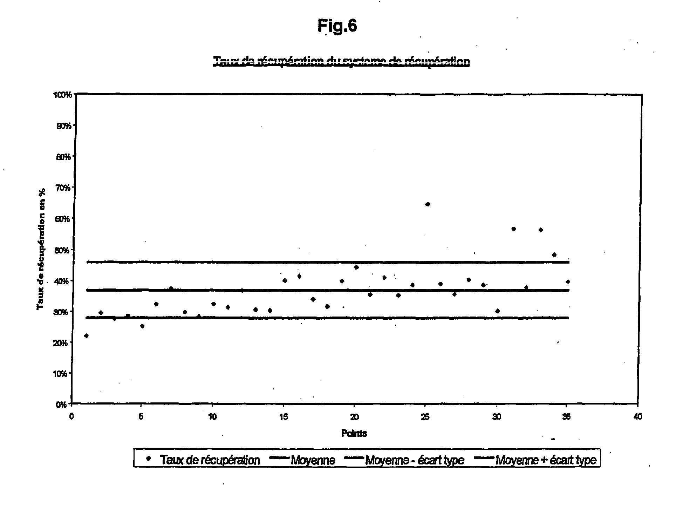

Une série de 35 mesures est effectuée. Le taux de récupération est de 40%. La plupart des points (88%) se situent entre + 1 écart type et - 1 écart type. Les résultats sont représentés sur la courbe de la figure 6.

Ces résultats mettent en lumière les avantages du dispositif : Il limite l'entraînement de l'air ambiant qui pollue le gaz, permet d'obtenir une décélération très brutale du flux de gaz, limite la pression totale sur la gélose à une valeur de l'ordre de 7500 Pa et évite d'avoir un réentrainement des microorganismes en limitant le taux de cisaillement sur la gélose à 80 Pa.

On obtient des taux de récupération centrés autour de 40% et reproductibles ; ceci constitue un résultat nettement supérieur aux résultats décrits dans l'état de la technique qui dépassent rarement 20% et d'une façon non reproductible.

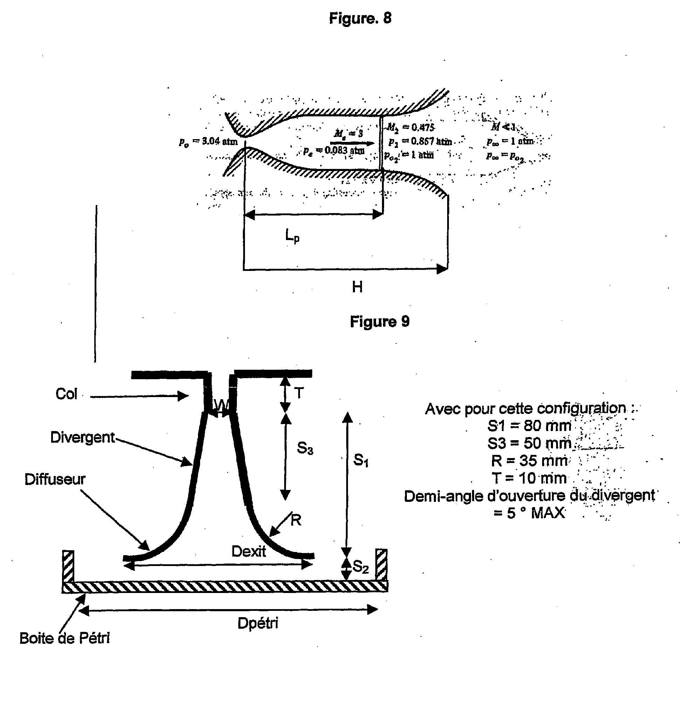

Les figures 8 et 9 représentent des dispositifs de forme de révolution non tronconique. Dans le dimensionnement du dispositif de la figure 8, la distance entre le col et le choc droit représente $L_p$. H est déterminé tel que $\sqrt{St}$ >0.2.

Lors d'une dernière série de mesures, nous avons étudié l'influence du débit de gaz à analyser avec un dispositif (D) de diamètre d'entrée w = 4 mm, et de longueur H = 80 mm, connecté à un tube d'alimentation en gaz de 6 / 1 mm..

Les résultats obtenus sont consignés dans le tableau suivant :

| Débit de gaz en litres / minute | Nombre d'UFC |
|---|---|
| 76 | 47 |
| 95 | 76 |
| 160 | 78 |
| 199 | 82 |

## Revendications

1. **Procédé de séparation par impaction,** de particules vivantes et revivifiables d'un gaz ou d'un mélange de gaz sous pression supérieure à 1 atmosphère en contenant, ledit procédé comprenant:

    - a) Une étape d'accélération en un étage et selon un axe x, d'un monoflux du gaz ou du mélange de gaz dans un volume confiné V, délimité par une surface latérale finie qui est une surface de révolution autour de l'axe x, pour atteindre une vitesse supérieure ou égale à la vitesse du son,
    - b) Une étape de décélération brutale dudit monoflux issu de l'étape a) dans ledit volume, selon substantiellement le même axe x, à pression atmosphérique, permettant d'obtenir une vitesse axiale selon l'axe x du monoflux tendant vers zéro,
    - c) Une étape de changement de la direction de l'écoulement du gaz ou du mélange de gaz à la sortie du volume V, qui devient radial en moyenne, et
    - d) Une étape de piégeage desdites particules séparées de l'écoulement lors de l'étape c), sur une cible.

2. Procédé tel que défini à la revendication 1, dans lequel le volume V consiste en une première fraction de volume $V_a$ dans laquelle est mise en oeuvre l'étape a), délimitée par deux bases $B_1$ et $B_2$, de surfaces $S_1$ et $S_2$, avec $S_1$ supérieure ou égale à $S_2$ et une deuxième fraction de volume $V_b$ contiguë à $V_a$, dans laquelle est mise en oeuvre l'étape b) délimitée par $B_2$ et une base $B_3$ de surface $S_3$ avec $S_3$ supérieure ou égale à $S_2$

3. Procédé tel que défini à la revendication 2, pour lequel, lorsque $S_1$ et $S_2$ sont égales, $S_1$ est inférieure à la section du flux de gaz circulant en amont du volume (V).

4. Procédé tel que défini à l'une quelconque des revendications 1 à 3, dans lequel la vitesse du flux du gaz ou du mélange de gaz à l'issue de l'étape a), est supérieure à la vitesse du son.

5. Procédé tel que défini à l'une quelconque des revendications 1 à 4, dans lequel l'étape d) de piégeage est mise en oeuvre sur une surface cible capable de fixer lesdites particules.

6. Procédé tel que défini à l'une quelconque des revendications 1 à 5, comprenant en outre une étape e) de comptage des particules piégées lors de l'étape d).

7. Procédé selon la revendication 6, dans laquelle l'étape e) consiste, en une étape $e_1$) de cultures des particules vivantes et revivifiables piégées à l'issue de l'étape d), suivie d'une étape $e_2$) de comptage des unités formant colonies.

8. Procédé selon l'une des revendications 1 à 7, **caractérisé en ce qu'**il est utilisé dans une procédure de détermination de la qualité microbiologique d'un gaz ou d'un mélange de gaz sous pression.

9. Procédé selon l'une des revendications 1 à 7, **caractérisé en ce qu'**il est utilisé dans une procédure de détermination de la qualité microbiologique de l'atmosphère de locaux.

10. Procédé selon l'une des revendications 1 à 7, **caractérisé en ce qu'**il est utilisé dans une procédure de détermination de la qualité microbiologique de gaz ou de mélanges de gaz contenus dans des bouteilles, et plus particulièrement de bouteilles de gaz médicaux ou de gaz destinés à l'industrie de fabrications des composants électroniques, à l'industrie alimentaire ou à l'industrie pharmaceutique.

11. Procédé selon l'une des revendications 1 à 7, **caractérisé en ce qu'**il est utilisé dans une procédure de détermination de la qualité microbiologique de gaz ou de mélanges de gaz délivrés par des réseaux d'alimentation, et plus particulièrement par des réseaux d'alimentation hospitaliers permettant notamment la délivrance de gaz dans les chambres ou les blocs opératoires, des réseaux d'alimentation des chaînes fabrication d'aliments surgelés, des réseaux d'alimentation en gaz de très haute pureté pour la fabrication de composants électroniques ou des réseaux d'alimentation en gaz nécessaires à la fabrication et/ou au conditionnement des produits et formulations pharmaceutiques.

12. Procédé selon l'une des revendications 1 à 7, **caractérisé en ce qu'**il est utilisé dans une procédure de détermination de la qualité microbiologique de gaz ou de mélanges de gaz en sortie d'une unité de production du gaz ou du mélange de gaz, et plus particulièrement en sortie d'un compresseur, d'une colonne de distillation cryogénique, d'une colonne de séparation des gaz par adsorption ou d'une unité de séparation des gaz par perméation, à travers des membranes polymères.

13. Procédé selon l'une des revendications 1 à 7, **caractérisé en ce qu'**il est utilisé dans une procédure de détermination de la qualité microbiologique de l'air ambiant dans des locaux, et plus particulièrement dans les salles blanches des sites de fabrication de médicaments ou des sites de fabrications de composants électroniques ou encore dans les sites de conservations de documents.

## Claims

1. Method for impact-separation of living or revivable particles from a gas or a gas mixture under a pressure above 1 atmosphere that contains them, said method comprising:

   - a) A step of accelerating, in one stage and along an axis x, a monoflow of the gas or the gas mixture in a confined volume V, bounded by a finite lateral surface which is a surface of revolution about the axis x, in order to reach a velocity greater than or equal to the speed of sound,
   - b) A step of sharply decelerating said monoflow coming from step a) in said volume, substantially along the same axis x, to atmospheric pressure, making it possible to obtain an axial velocity along the axis x of the monoflow tending to zero,
   - c) A step of changing the direction of the stream of the gas or the gas mixture at the exit of the volume V, which becomes radial on average, and
   - d) A step of trapping said particles separated from the stream during step c), on a target.

2. Method as defined in Claim 1, in which the volume V consists of a first volume fraction $V_a$, in which step a) is carried out and which is delimited by two bases $B_1$ and $B_2$ of areas $S_1$ and $S_2$, with $S_1$ greater than or equal to $S_2$, and a second volume fraction $V_b$ contiguous to $V_a$, in which step b) is carried out and which is delimited by $B_2$ and a base $B_3$ of area $S_3$, with $S_3$ greater than or equal to $S_2$.

3. Method as defined in Claim 2, for which, when $S_1$ and $S_2$ are equal, $S_1$ is less than the cross section of the gas flow circulating upstream of the volume (V).

4. Method as defined in any one of Claims 1 to 3, in which the velocity of the flow of the gas or the gas mixture coming from step a) is greater than the speed of sound.

5. Method as defined in any one of Claims 1 to 4, in which the trapping step d) is carried out on a target surface capable of fixing said particles.

6. Method as defined in any one of Claims 1 to 5, further comprising a step e) of counting the particles trapped during step d).

7. Method according to Claim 6, in which step e) consists of a step $e_1$) of culturing the trapped living and revivable particles coming from step d), followed by a step $e_2$) of counting the colony-forming units.

8. Method according to one of Claims 1 to 7, **characterized in that** it is used in a procedure for determining the microbiological quality of a gas or a gas mixture under pressure.

9. Method according to one of Claims 1 to 7, **characterized in that** it is used in a procedure for determining the microbiological quality of the atmosphere of rooms.

**10.** Method according to one of Claims 1 to 7, **characterized in that** it is used in a procedure for determining the microbiological quality of gases or gas mixtures contained in bottles, and more particularly bottles of medical gases or gases intended for the electronic-component fabrication industry, the food industry or the pharmaceutical industry.

**11.** Method according to one of Claims 1 to 7, **characterized in that** it is used in a procedure for determining the microbiological quality of gases or gas mixtures delivered by supply networks, and more particularly by hospital supply networks, in particular for delivering gases into the operating theatres or units, supply networks of deep-frozen food production lines, networks for supplying gases with very high purity for the fabrication of electronic components, or networks for supplying gases needed for the manufacture and/or packaging of pharmaceutical products and formulations.

**12.** Method according to one of Claims 1 to 7, **characterized in that** it is used in a procedure for determining the microbiological quality of gases or gas mixtures at the exit of a unit for producing the gas or the gas mixture, and more particularly at the exit of a compressor, a cryogenic distillation column, a column for separating gases by adsorption or a unit for separating gases by permeation, through polymer membranes.

**13.** Method according to one of Claims 1 to 7, **characterized in that** it is used in a procedure for determining the microbiological quality of the ambient air in rooms, and more particularly in clean rooms of sites for manufacturing medicaments or sites for fabricating electronic components, or alternatively sites for storing documents.

**Patentansprüche**

**1.** Verfahren zur Abtrennung lebender und wiederbelebbarer Partikel von einem Gas oder einem Gasgemisch durch Abfangen, wobei das Gas oder das Gasgemisch, welches die Partikel enthält, unter einem Druck von mehr als 1 Atmosphäre steht und das Verfahren die folgenden Schritte umfasst:

- a) einen Schritt, in welchem ein gleichförmiger Strom eines Gases oder eines Gasgemisches in einem abgegrenzten Volumen V innerhalb einer Ebene und entlang einer Achse x beschleunigt wird, wobei das Volumen durch eine endliche Seitenfläche begrenzt wird, welche rotationssymmetrisch um die Achse x herum angeordnet ist, sodass eine Geschwindigkeit erreicht wird, die größer oder gleich der Schallgeschwindigkeit ist,

- b) einen Schritt, in welchem der gleichförmige Strom, der aus Schritt a) stammt, bei Atmosphärendruck in dem Volumen schlagartig abgebremst wird, und zwar im Wesentlichen entlang derselben Achse x, wodurch es ermöglicht wird, dass die Axialgeschwindigkeit des gleichförmigen Stroms entlang der Achse x gegen null strebt,

- c) einen Schritt, in welchem sich die Strömungsrichtung des Gases oder des Gasgemisches an der Austrittsöffnung des Volumens V derart ändert, dass sie im Durchschnitt radial wird, sowie

- d) einen Schritt, in welchem die Partikel, welche in Schritt c) in der Strömung abgetrennt wurden, mittels einer Zielvorrichtung abgefangen werden.

**2.** Verfahren gemäß der Begriffsbestimmung in Anspruch 1, wobei das Volumen V aus einem ersten Volumenabschnitt $V_a$ besteht, in welchem der Schritt a) durchgeführt wird und welcher durch zwei Grundflächen $B_1$ und $B_2$, die Oberflächen $S_1$ und $S_2$ aufweisen, begrenzt wird, wobei $S_1$ größer oder gleich $S_2$ ist, sowie aus einem zweiten, an $V_a$ angrenzenden, Volumenabschnitt $V_b$, in welchem der Schritt b) durchgeführt wird und welcher durch $B_2$ und eine Grundfläche $B_3$, die eine Oberflächen $S_3$ aufweist, begrenzt wird, wobei $S_3$ größer oder gleich $S_2$ ist.

**3.** Verfahren gemäß der Begriffsbestimmung in Anspruch 2, bei welchem, wenn $S_1$ und $S_2$ gleich groß sind, $S_1$ kleiner als die Querschnittsfläche des Gasstroms, der stromaufwärts des Volumens (V) fließt, ist.

**4.** Verfahren gemäß der Begriffsbestimmung in einem beliebigen der Ansprüche 1 bis 3, wobei die Strömungsgeschwindigkeit des Gases oder des Gasgemisches, welches den Schritt a) durchlaufen hat, größer als die Schallgeschwindigkeit ist.

**5.** Verfahren gemäß der Begriffsbestimmung in einem beliebigen der Ansprüche 1 bis 4, wobei der Abfangschritt d) an einer Zielfläche erfolgt, die dazu befähigt ist, die Partikel festzuhalten.

**6.** Verfahren gemäß der Begriffsbestimmung in einem beliebigen der Ansprüche 1 bis 5, welches darüber hinaus einen Schritt e) umfasst, in welchem die Partikel, die in Schritt d) abgefangen wurden, gezählt werden.

**7.** Verfahren gemäß dem Anspruch 6, wobei der Schritt e) darin besteht, in einem Schritt $e_1$) die lebenden und wiederbelebbaren Partikel, die in Schritt d) abgefangen wurden, anzuzüchten, woraufhin in einem Schritt e₂) die koloniebildenden Einheiten gezählt werden.

8. Verfahren gemäß einem der Ansprüche 1 bis 7, **dadurch gekennzeichnet, dass** es in einem Prozess zur Bestimmung der mikrobiologischen Qualität eines unter Druck stehenden Gases oder Gasgemisches angewendet wird.

9. Verfahren gemäß einem der Ansprüche 1 bis 7, **dadurch gekennzeichnet, dass** es in einem Prozess zur Bestimmung der mikrobiologischen Qualität der Atmosphäre von Innenräumen angewendet wird.

10. Verfahren gemäß einem der Ansprüche 1 bis 7, **dadurch gekennzeichnet, dass** es in einem Prozess zur Bestimmung der mikrobiologischen Qualität von Gasen oder Gasgemischen, welche sich in Flaschen befinden, angewendet wird, wobei es sich insbesondere um Flaschen mit medizinischen Gasen oder Gasen, die für Herstellungsbetriebe von Elektronikbauteilen, für die Lebensmittelindustrie oder für die pharmazeutische Industrie bestimmt sind, handelt.

11. Verfahren gemäß einem der Ansprüche 1 bis 7, **dadurch gekennzeichnet, dass** es in einem Prozess zur Bestimmung der mikrobiologischen Qualität von Gasen oder Gasgemischen angewendet wird, die über Versorgungsnetze abgegeben werden, und zwar insbesondere über Versorgungsnetze in Krankenhäusern, welche es insbesondere ermöglichen, Zimmer oder Operationssäle mit Gasen zu versorgen, sowie über Versorgungsnetze für Fertigungsstraßen von tiefgekühlten Lebensmitteln, über Netze zur Versorgung mit Reinstgasen, die für die Herstellung von Elektronikbauteilen bestimmt sind, oder über Netze zur Versorgung mit Gasen, die zur Herstellung und/oder Verpackung von pharmazeutischen Produkten und Formulierungen erforderlich sind.

12. Verfahren gemäß einem der Ansprüche 1 bis 7, **dadurch gekennzeichnet, dass** es in einem Prozess zur Bestimmung der mikrobiologischen Qualität von Gasen oder Gasgemischen an der Austrittsöffnung einer Einheit zur Herstellung des Gases oder des Gasgemisches angewendet wird, wobei es sich insbesondere um die Austrittsöffnung eines Kompressors, einer gekühlten Flüssiggas-Destillationskolonne, einer Kolonne zur Trennung von Gasen durch Adsorption oder einer Einheit zur Trennung von Gasen durch Permeation durch Polymermembrane handelt.

13. Verfahren gemäß einem der Ansprüche 1 bis 7, **dadurch gekennzeichnet, dass** es in einem Prozess zur Bestimmung der mikrobiologischen Qualität der Umgebungsluft in Innenräumen angewendet wird, wobei es sich insbesondere um Reinräume von Einrichtungen zur Herstellung von Arzneimitteln oder von Einrichtungen zur Herstellung von elektronischen Bauteilen oder auch um Einrichtungen zur Verwahrung von Dokumenten handelt.

**FIG.1A**

Col

Diffuseur

Boite de Pétri

w = 4 mm

h = 10 mm

H varie entre 40 et 160 mm

d = 13 mm

W₁ = 90 mm

W = 75 mm

**FIG.1B**

**Fig. 2**

Zone de
recirculation

Zone de
décollement

Zone potentiel
$L_p$

**Fig.3**

Mesure de l'efficacité fonction de H

## Fig.4

**Vitesse max sur l'axe**

## Fig. 5

**Pression totale sur la boîte de Pétri**

## Fig.6

Taux de récupération du système de récupération

**Fig 7A**

**Figure. 8**

**Figure 9**

Avec pour cette configuration :
S1 = 80 mm
S3 = 50 mm
R = 35 mm
T = 10 mm
Demi-angle d'ouverture du divergent
= 5 ° MAX

Figure 10a

Figure 10b

## Figure 11a

## Figure 11b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5831182 A
- US 5183481 A
- US 3522734 A
- WO 0040338 A